# EUROPEAN PATENT APPLICATION

(11) **EP 1 993 025 A2**
(43) Date of publication of application: **19.11.2008**
(21) Application number: 08103935.6
(22) Date of filing: 13.05.2008
(51) Int. Cl.: G06F 3/041

(54) **Delay judgment systems and methods**

(30) Priority: 15.05.2007 TW 96117203
(71) Applicant: High Tech Computer Corp., Taoyuan (TW)
(72) Inventor: Hsu, Chih-Feng, Taoyuan (TW); Kao, Yih-Feng, Taoyuan (TW); Wang, John C., Taoyuan (TW); Huang, Ming-San, Taoyuan (TW)
(74) Representative: 2K Patentanwälte Kewitz & Kollegen

(57) **Abstract**

Delay judgment systems and methods are provided. The system (100) comprises an input device (110) and a processing module (140). The processing module (140) receives and buffers a plurality of inputs via the input device (110) within a specific time period, where each input comprises an input property. After the specific time period, the processing module (140) performs a determination according to the input properties of the respective inputs.

## Description

### BACKGROUND OF THE INVENTION

### FIELD OF THE INVENTION

The disclosure relates generally to delay judgment systems and methods, and, more particularly to delay judgment systems and methods that perform determinations according to inputs received within a time period.
The present application claims priority under Art. 87 EPC from Taiwanese (R.O.C) Patent Application No. 96117203 filed on May 15, 2007, the whole content of which is hereby incorporated by reference.

### DESCRIPTION OF THE RELATED ART

Recently, portable devices, such as handheld devices, have become more and more technically advanced and multifunctional. For example, a handheld device may have e-mail message capabilities, an advanced address book management system, a media playback system, and various other functions. Due to increased convenience and functions of the devices, these devices have become necessities of life.

Handheld devices may provide input devices for users to control functions. For example, a handheld device may be equipped with a touch-sensitive device for users to perform related operations. Users can slide their fingers on the touch-sensitive device, and accordingly perform related operations. For example, users can select or move among items of a list by sliding their fingers on the touch-sensitive device.

Conventionally, when contact is detected by the touch-sensitive device, the handheld device immediately performs a determination in response to the contact. For example, when contact on the touch-sensitive device is detected, the handheld device directly determines that a user wants to select a specific item displayed on a display unit of the handheld device. Additionally, when contact on the touch-sensitive device is detected to have been removed, the handheld device directly determines that the user's finger has left the touch-sensitive device, and performs corresponding operations. However, since the user may have a rough finger surface and inconsistent contact points and contact pressure, erroneous determinations may easily occur if operations are determined only by the contact method used in conventional practices.

### BRIEF SUMMARY OF THE INVENTION

Delay judgment systems and methods are provided.

An embodiment of a delay judgment system comprises an input device and a processing module. The processing module receives and buffers a plurality of inputs via the input device within a specific time period, where each input comprises an input property. After the specific time period, the processing module performs a determination according to the input properties of the respective inputs.

In an embodiment of a delay judgment method, a plurality of inputs is received and buffered via an input device within a specific time period, where each input comprises an input property. After the specific time period, a determination is performed according to the input properties of the respective inputs.

An embodiment of a portable device comprises a touch-sensitive sensor, a storage device and a processor. The touch-sensitive sensor detects contacts thereon to receive input signals. The storage device comprises a computer program. The processor processes the input signals according to the computer program. When the computer program is executed, a portable device is driven to practice the delay judgment method of the above embodiment.

An embodiment of an electronic device comprises a housing with an opening, a touch-sensitive display, and a processor. The touch-sensitive display is disposed in the opening of the housing to receive at least one input signal. The touch-sensitive display has a touch-sensitive surface, and the surface of the housing does not substantially protrude the touch-sensitive surface. The processor performs the delay judgment method of the above embodiment, and displays related data on the touch-sensitive display.

Delay judgment systems and methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a delay judgment system;

Fig. 2 is a schematic diagram illustrating an embodiment of a portable device having a touch-sensitive device;

Fig. 3 is a flowchart of an embodiment of a delay judgment method;

Fig. 4 is a flowchart of an embodiment of a delay judgment method;

Fig. 5 is a flowchart of an embodiment of a delay judgment method;

Figs. 6A and 6B are schematic diagrams illustrating embodiments of determination of the pointer type;

Fig. 7 is a flowchart of an embodiment of a delay judgment method;

Fig. 8A is a schematic diagram illustrating an embodiment of the front view of an electronic device having a touch-sensitive display; and

Fig. 8B is a schematic diagram illustrating an embodiment of the cross-sectional view of the electronic device in Fig. 8A.

### DETAILED DESCRIPTION OF THE INVENTION

Delay judgment systems and methods are provided.

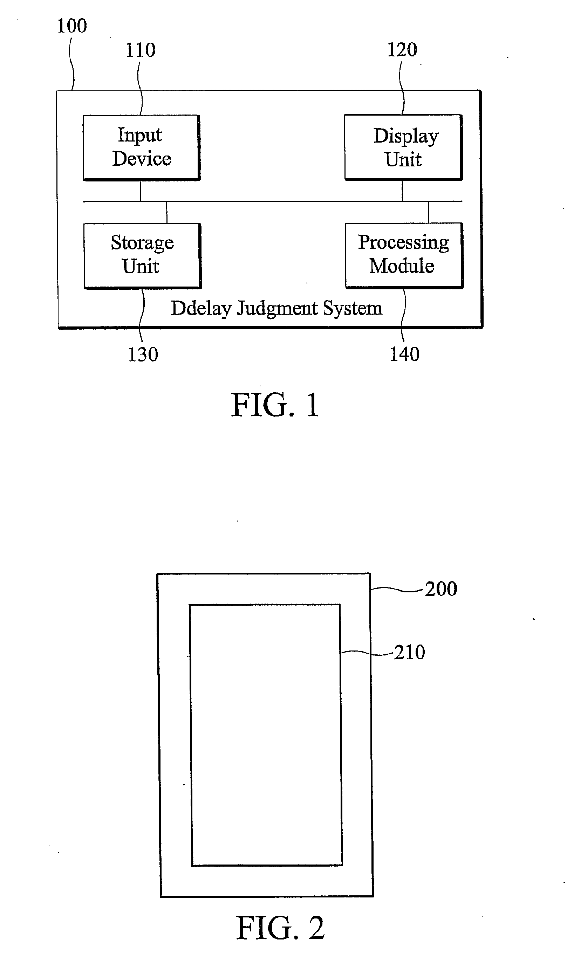

Fig. 1 is a schematic diagram illustrating an embodiment of the delay judgment system of the invention.

The delay judgment system 100 comprises an input device 110, a display unit 120, a storage unit 130, and a processing module 140. The input device 110 may be a touch-sensitive device 210, as shown in Fig. 2, set on a device 200 such as a portable device comprising a handheld device, such as a media player, a PDA (Personal Digital Assistant), a GPS (Global Positioning System) device, a smart phone, and a mobile phone. The touch-sensitive device 210 comprises a touch-sensitive surface having at least one sensor in at least one dimension to detect the contact and movement of a pointer, such as a finger or a stylus thereon. The display unit 120 displays related information, such as a menu, an e-mail message list, an address book, a contact list, a web page, and others. The storage unit 130 stores related information, and provides the information to the display unit 120 for display. The processing module 140 performs the delay judgment methods of the application, which will be discussed further in the following paragraphs.

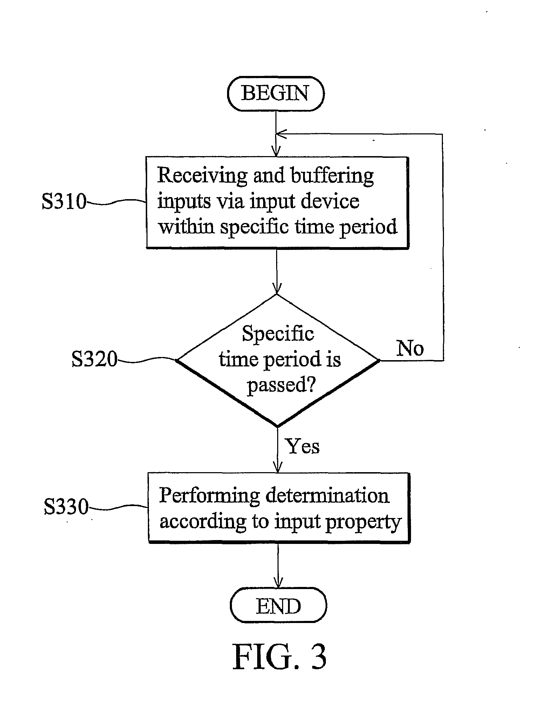

Fig. 3 is a flowchart of an embodiment of the delay judgment method of the invention.

In step S310, inputs are received and buffered via the input device within a specific time period. Each input comprises an input property, such as strength, position, and existence of the input. In step S320, it is determined whether the specific time period has passed. If not (No in step S320), the procedure returns to step S310, and continues to receive and buffer inputs via the input device. If so (Yes in step S320), in step S330, a determination is performed according to the input properties of the respective inputs. It is understood that, in this embodiment, several inputs are received within a time period, and a determination is made according to the inputs received within the time period. It is different from the conventional practice, where a determination is made according to a single input during a single point in time. Additionally, various determinations can be applied in the application.

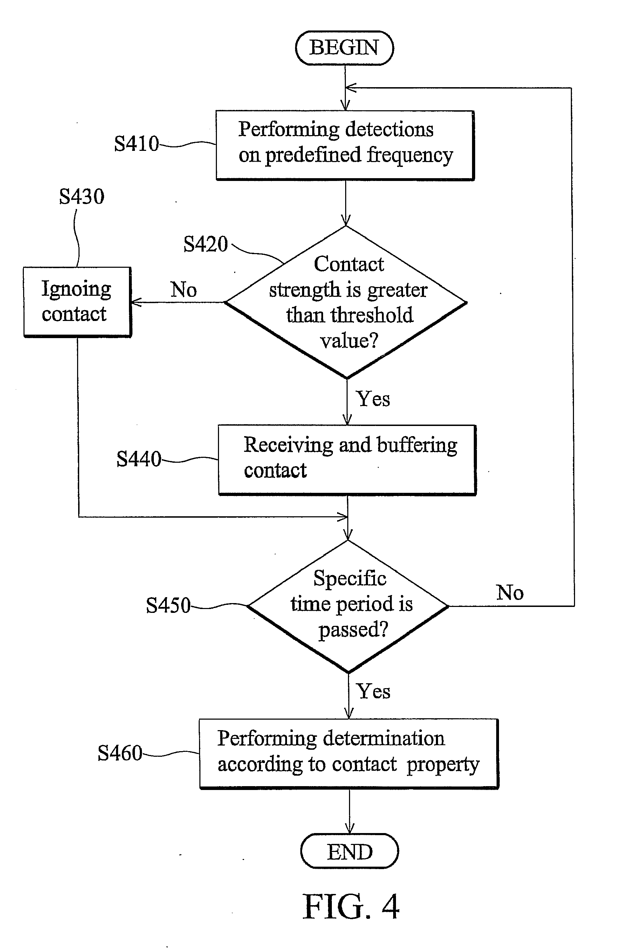

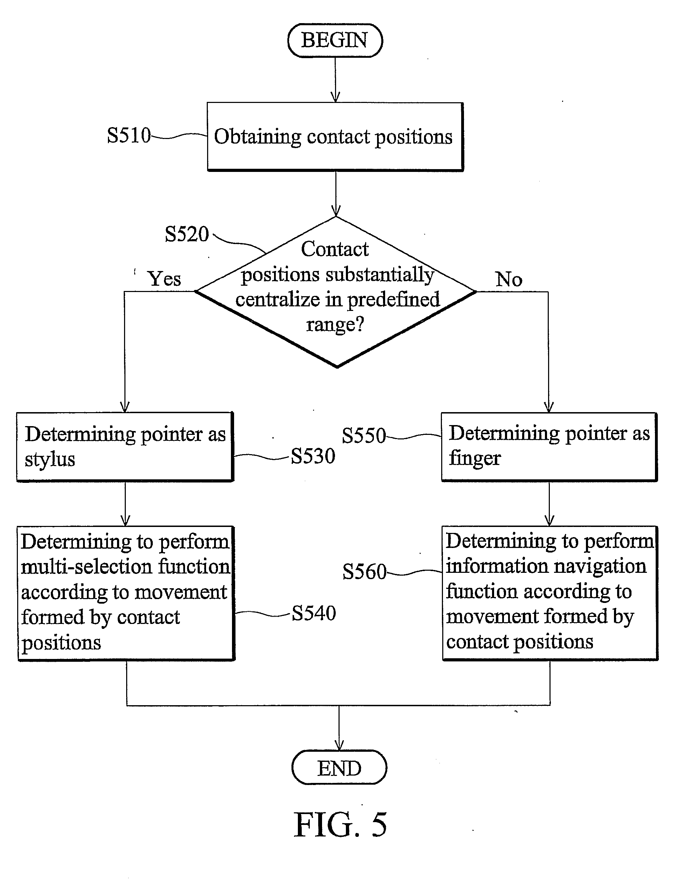

A touch-sensitive device operates on a resistance-type sensing principle, for example, the contact resistance value calculated by the sensor of the touch-sensitive device will be influenced by the contact area (position) and pressure (strength) between the input tool and the touch-sensitive device. Therefore, the type (stylus or finger) of the input tool can be identified by comparing parameters comprising the contact area and strength, and the combinations thereof. Fig. 4 and Fig. 5 respectively describe the distributions for contact strength and contact point detected by the touch-sensitive device.

Fig. 4 is a flowchart of an embodiment of the delay judgment method of the invention. In this embodiment, the input device may be a touch-sensitive device for detecting the contact of a pointer.

In step S410, detections are performed via the touch-sensitive device on a predefined frequency. In step S420, it is determined whether the contact strength of a detected contact is greater than a threshold value. If not (No in step S420), in step S430, the contact is ignored. If so (Yes in step S420), in step S440, the contact is received and buffered. It is noted that, the contact properties, such as contact strength and position are also recorded in step S440. In step S450, it is determined whether the specific time period has passed. If not (No in step S450), the procedure returns to step S410, and continues to perform the detections via the touch-sensitive device on the predefined frequency. If so (Yes in step S450), in step S460, a determination is performed according to the input properties of the respective inputs.

Fig. 5 is a flowchart of an embodiment of the delay judgment method of the invention. In this embodiment, the input device may be a touch-sensitive device for detecting the contact of a pointer. Additionally, the type of the pointer can be determined according to the contact positions, and related functions can be accordingly performed.

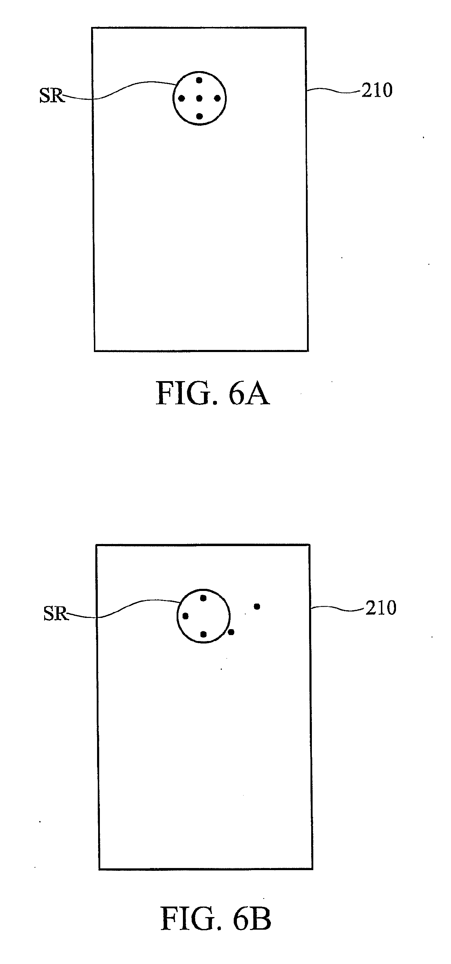

In step S510, contact positions of the respective contacts are obtained. In step S520, it is determined whether the distribution of the contact positions is substantially centralized within a predefined range. It is understood that the centralization degree of the contact positions can be defined according to different applications and requirements. For example, a definition requiring that 80 percent of the contact positions must fall into a predefined range. If the distribution of the contact positions is substantially centralized within the predefined range (Yes in step S520), in step S530, the pointer is determined to be a stylus, and in step S540, a multi-selection function is determined to perform according to a movement formed by the contact positions of the respective contacts. If the distribution of the contact positions is not substantially centralized within the predefined range (No in step S520), in step S550, the pointer is determined to be a finger, and in step S560, an information navigation function is determined to perform according to a movement formed by the contact positions of the respective contacts. For example, the item in the display unit is panned or scrolled. Figs. 6A and 6B are schematic diagrams illustrating embodiments of the determination of the pointer type according to the invention. If five contact points (black points) are detected within a specific time period, as shown in Fig. 6A, and all of the contact points fall in a predefined range SR, the pointer is determined to be a stylus. If five contact points (black points) are detected within a specific time period, as shown in Fig. 6B, and three of the contact points fall in the predefined range SR (< 80%), the pointer is determined to be a finger.

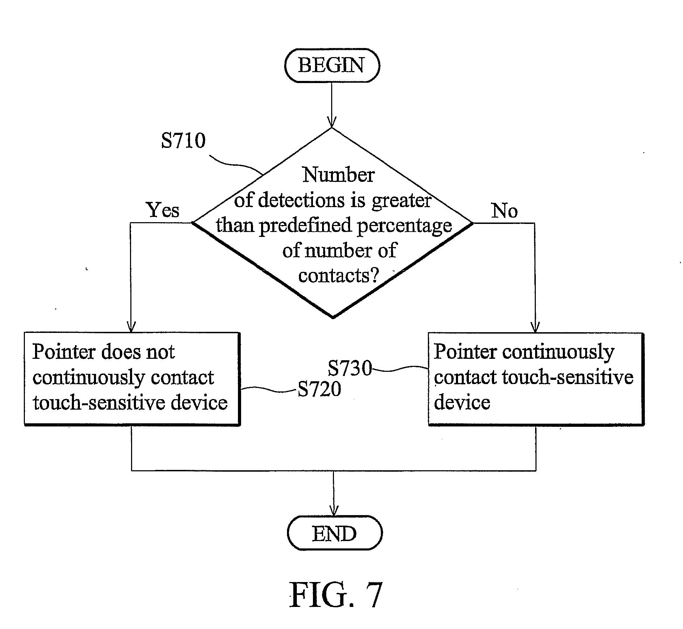

Fig. 7 is a flowchart of an embodiment of the delay judgment method of the invention. In this embodiment, it is determined whether the pointer continuously contacts the touch-sensitive device.

In step S710, it is determined whether the number of the detections is greater than a predefined percentage of the number of the contacts. It is understood that, since the detections are performed via the touch-sensitive device on a predefined frequency, the number of the detections within the specific time period can be known. If the number of the detections is greater than the predefined percentage of the number of the contacts (Yes in step S710), in step S720, it is determined that the pointer is not in continuous contact with the touch-sensitive device. If the number of the detections is not greater than the predefined percentage of the number of the contacts (No in step S710), in step S730, it is determined that the pointer is in continuous contact with the touch-sensitive device. In this embodiment, erroneous determinations due to inconsistent contact points and contact pressure of the pointer can be avoided.

In addition to the above embodiments, the delay judgment system can be used to determine a combination of application procedures and activation of the procedures. For example, in an application where the touch-sensitive device detects an input tool, a corresponding function or user interface can be further activated according to the type of the input tool. As the embodiment in Fig. 5 shows, when the input tool is determined to be a finger and the finger performs an allowed input movement on the touch-sensitive device, the corresponding function is picture navigation by scrolling or panning. When the input tool is determined to be a stylus and the stylus performs an allowed input movement on the touch-sensitive device, the corresponding function is multiple item selection. Since the functions corresponding to the input tools are different, an erroneous determination of the input tool will result in a function selection error, thus inconveniencing users. That is, it is important to ensure the correctness of input type determination. In the delay judgment systems of the invention, the response time for determination is delayed, and a corresponding function is activated after the input tool type is correctly determined. For the invention, accurate determinations by the system and user experience are improved.

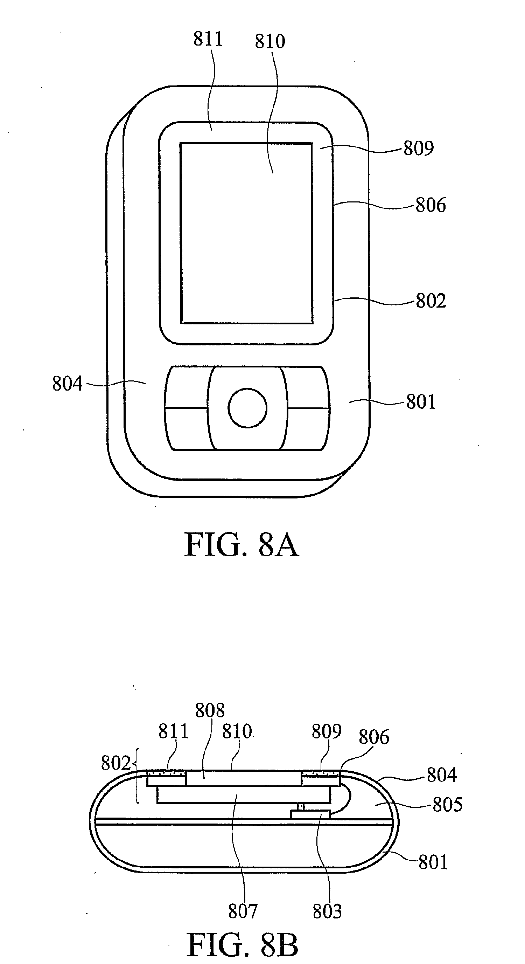

The touch-sensitive device in the above embodiments is a hardware component of an electronic device. In some embodiments, the display unit and the touch-sensitive device can be integrated as a touch-sensitive display, as shown in Figs. 8A and 8B.

Fig. 8A is a schematic diagram illustrating an embodiment of a front view of an electronic device having a touch-sensitive display, and Fig. 8B is a schematic diagram illustrating an embodiment of the cross-sectional view of the electronic device in Fig. 8A. The electronic device comprises a housing 801, a touch-sensitive display 802, and a processor 803. The housing 801 has a surface 804 and a cavity 805, wherein the cavity 805 is exposed to the outside from the housing 801 through an opening 806 of the surface 804. The touch-sensitive display 802 comprises a display unit 807 and a touch-sensitive device 808. The display unit 807 is disposed in the cavity 805 of the housing 801. The touch-sensitive device 808 is disposed in the opening 806 of the surface 804 of the housing 801 to receive an input of a pointer, and detect input signals corresponding to contact and movement of the pointer. The touch-sensitive device 808 has a touch-sensitive sensor 809, wherein the touch-sensitive sensor 809 comprises a display area 810 and a non-display area 811. The edge of the opening 806 of the housing 801 is continuously connected to the touch-sensitive sensor 809, and the surface 804 of the housing 801 does not substantially protrude the touch-sensitive sensor 809. A storage device (not shown) storing a computer program can be disposed in the housing 801 or externally coupled to the electronic device. The processor 803 couples to the storage device, the display unit 807, and the touch-sensitive device 808, and processes the input signals according to the computer program for information navigation. It is understood that since the surface 804 of the housing 801 does not substantially protrude the touch-sensitive sensor 809, the surface 804 of the housing 801 and the touch-sensitive sensor 809 can be regarded as a continuous and smooth surface, such that an input tool can move and operate without any obstruction. Similarly, the processor 803 can determine the contact and movement behavior of the input tool according to the input signals detected by the touch-sensitive device 808. The determination procedures and related processes are similar to that as in previous embodiments.

For the application, a determination is performed according to several inputs received within a time period, thus avoiding erroneous determinations due to single input determination.

Delay judgment systems and methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A delay judgment system (100), comprising:
an input device (110); and
a processing module (140) coupled to the input device (110), receiving and buffering at least one input via the input device (110) within a specific time period, and performing a determination according to the input after the specific time period.

2. The system (100) of claim 1, wherein
the input device (110) comprises a touch-sensitive device (210; 808), and the input comprises at least one contact corresponding to a pointer on the touch-sensitive device (210; 808); and
the input has an input property, the input property comprises a strength of the contact, and the processing module (140) further determines whether the strength is greater than a threshold value, and if not, the contact is ignored.

3. The system (100) of claim 1, wherein
the input device (110) comprises a touch-sensitive device (210; 808), and the input comprises at least one contact corresponding to a pointer on the touch-sensitive device (210; 808); and
the input has an input property, the input property comprises a contact position of the at least one contact, and the processing module (140) performs the determination of the type of the pointer according to the contact position of the at least one contact.

4. The system (100) of claim 3, wherein
the processing module (140) determines the pointer as a stylus when a distribution of the contact position of the at least one contact is substantially centralized within a predefined range; and
the processing module (140) determines the pointer as a finger when a distribution of the contact position of the at least one contact is not substantially centralized within a predefined range.

5. The system (100) of claim 4, wherein the processing module (140) further determines to perform a multi-selection function according to a movement formed by the contact position of the at least one contact.

6. The system (100) of claim 4, wherein the processing module (140) further determines to perform an information navigation function according to movement formed by the contact position of the at least one contact.

7. The system (100) of claim 2, wherein the input device (110) comprises a touch-sensitive device (210; 808), and the input comprises at least one contact corresponding to a pointer on the touch-sensitive device (210; 808), and the touch-sensitive device (210; 808) performs a plurality of detections within the specific time period on a predefined frequency, and the processing module (140) determines that the pointer is not in continuous contact with the touch-sensitive device (210; 808) when a number of the detections is greater then a predefined percentage of a number of the at least one contact.

8. A delay judgment method, comprising:
receiving and buffering (S310) at least one input via an input device (110) within a specific time period; and
performing a determination (S330) according to the input after the specific time period.

9. The method of claim 8, wherein the input device (110) comprises a touch-sensitive device (210; 808), and the input comprises at least one contact corresponding to a pointer on the touch-sensitive device (210; 808); and the input has an input property, the input property comprises a strength of the contact, and the method further comprises:
determining whether the strength is greater than a threshold value (S420); and
if the strength is not greater than a threshold value, ignoring the contact (S430).

10. The method of claim 8, wherein the input device (110) comprises a touch-sensitive device (210; 808), and the input comprises at least one contact corresponding to a pointer on the touch-sensitive device (210; 808); and the input has an input property, the input property comprises a contact position of the at least one contact, and the method further performs the determination of the type of the pointer according to the contact position of the at least one contact (S510).

11. The method of claim 10, further comprising
determining the pointer as a stylus (S530) when a distribution of the contact position of the at least one contact is substantially centralized within a predefined range (S520); and
determining the pointer as a finger (S550) when a distribution of the contact position of the at least one contact is not substantially centralized within a predefined range (S520).

12. The method of claim 11, further comprising determining to perform a multi-selection function (S540) according to a movement formed by the contact position of the at least one contact.

13. The method of claim 11, further comprising determining to perform an information navigation function (S560) according to movement formed by the contact position of the at least one contact.

14. The method of claim 8, further comprising:
performing a plurality of detections within the specific time period on a predefined frequency via the touch-sensitive device (210; 808); and
determining that the pointer is not in continuous contact (S720) with the touch-sensitive device (210; 808) when a number of the detections is greater then a predefined percentage of a number of the at least one contact (S710).

15. A machine-readable storage medium comprising a computer program, which, when executed, causes a device to perform a delay judgment method, and the method comprising:
receiving and buffering at least one input via an input device (110) within a specific time period; and
performing a determination according to the input after the specific time period.
